# EUROPÄISCHE PATENTSCHRIFT

(11) **EP 2 423 557 B1**
(45) Veröffentlichungstag und Bekanntmachung des Hinweises auf die Patenterteilung: **01.02.2017**
(21) Anmeldenummer: 11005925.0
(22) Anmeldetag: 20.07.2011
(51) Int. Cl.: F28D 1/053, F16L 57/00, F24D 19/00, F16L 55/11, F24D 19/08

(54) **Verwendung eines Verschlussstopfens.**
Use of a closing plug.
Utilisation d'un bouchon de fermeture

(30) Priorität: 31.08.2010 DE 202010011996 U
(43) Veröffentlichungstag der Anmeldung: 29.02.2012
(73) Patentinhaber: Zehnder Group International AG, 5722 Gränichen (CH)
(72) Erfinder: Weschle, Hans-Peter, 77743 Neuried (DE)
(74) Vertreter: Stenger Watzke Ring

(56) Entgegenhaltungen:
- EP-A2- 1 906 070
- DE-U1- 7 927 235
- DE-U1-202006 013 406
- US-A- 3 417 768
- US-A- 4 085 860
- US-A- 4 164 953
- US-A- 5 048 554

## Beschreibung

Die Erfindung betrifft die Verwendung eines Verschlussstopfens, der dem Verschluss einer Anschlussöffnung eines Heizkörpers dient.

Heizkörper als solche sind aus dem Stand der Technik wohlbekannt, weshalb es eines gesonderten druckschriftlichen Nachweises an dieser Stelle dem Grunde nach nicht bedarf. Es sei deshalb nur beispielhaft auf die DE 20 2008 005 391 U1, die DE 198 18 209 C2, die DE 60 2005 006 246 T2 und die DE 10 2005 060 120 A1 verwiesen.

Die DE 20 2008 005 391 U1 betrifft einen Röhrenradiator, der über eine Vielzahl von nebeneinander angeordneten und miteinander verbundenen Radiatorgliedern verfügt. Die Radiatorglieder verfügen in ihrem oben sowie in ihrem unteren Endbereich jeweils über Ausnehmungen aufweisende Naben bzw. Verbindungshülsen. Dabei ist vorgesehen, dass zwischen den beiden einander zugekehrten oberen Verbindungshülsen und den beiden einander zugekehrten unteren Verbindungshülsen des ersten endständigen und des zweiten Radiatorgliedes jeweils eine Lochscheibe eingesetzt ist, die einen reduzierten Durchflussquerschnitt bereitstellt.

Die DE 198 18 209 C2 betrifft einen Universal-Gliederheizkörper. Dieser ist aus einzelnen Heizkörpergliedern gebildet, wobei an der oberen Verbindungsstelle zwischen dem ersten und dem zweiten Heizkörperglied ein der oberen horizontalen Anschlussgewindebohrung des ersten Heizkörpergliedes zugewandtes, zentrierendes Ventilsitzelement eingebaut ist. Ferner ist an der unteren Verbindungsstelle zwischen dem ersten und dem zweiten Heizkörperglied entweder ebenfalls ein der horizontalen Anschlussbohrung des zweiten Heizkörpergliedes zugewandtes zentrierendes Ventilsitzelement oder ein Trägerelement mit einer durch die horizontale Anschlussgewindebohrung hindurch zwischen einer Offenstellung und einer Schließstellung verstellbaren Verschlussscheibe eingebaut.

Ein weiterer Heizkörper ist aus der DE 25 47 109 bekannt geworden, die einen druckgegossenen Leichtmetall-Radiator betrifft. Die Besonderheit dieses Radiators liegt in der Ausgestaltung eines im Wesentlichen vertikal verlaufenden Wasserkanals, der unmittelbar unterhalb einer Durchtrittsstelle eines unteren Anschlusskanals durch jeweils ein unverschweißtes Verschlussstück abgedichtet ist.

Das Dokument DE792735U1 offenbart die Verwendung eines aus Kunststoff Verschlussstopfens zum Verschluss einer Anschlussöffnung des Maschinen-Apparateteilen.

Zum Anschluss eines Heizkörpers an Zu- und/oder Abführungsleitungen für das Heizmedium, welches beispielsweise Wasser sein kann, verfügt ein Heizkörper über entsprechende Anschlussöffnungen. Diese sind zumeist mit einem Innengewinde versehen, was den einfachen Anschluss von Zu- und/oder Abführungsleitungen mittels entsprechender Gewindemuffen oder dergleichen ermöglicht.

Aus dem Stand der Technik ist es bekannt, diese mit einem Gewinde versehenen Anschlussöffnungen eines Heizkörpers zu verschließen, während der Heizkörper im Zuge seiner Herstellung in einer entsprechenden Anlage lackiert wird. Auf diese Weise soll verhindert werden, dass Lack in die Gewinde der Anschlussöffnungen und/oder in das Innere des Heizkörpers gelangt. Zum Verschließen der Anschlussöffnungen dienen Schutzstopfen, die nach endfertig abgeschlossenem Vorgang des Lackierens aus den Anschlussöffnungen wieder entfernt werden.

Aus dem Stand der Technik ist es ferner bekannt, in die Anschlussöffnungen eines Heizkörpers Sicherungsstopfen zu Transportzwecken einzubringen. Diese Stopfen sollen eine Beschädigung der Gewinde der Anschlussöffnungen während eines Transportes des Heizkörpers und/oder während einer Handhabung des Heizkörpers auf der Baustelle verhindern helfen. Bei der Endmontage werden diese Stopfen vom Monteur entfernt, um einen bestimmungsgemäßen Anschluss des Heizkörpers an Zu- und/oder Abführungsleitungen zu ermöglichen.

Obgleich sich die vorbeschriebene Vorgehensweise und die Verwendung von Schutzstopfen und/oder Sicherungsstopfen im alltäglichen Praxiseinsatz bewährt hat, besteht Verbesserungsbedarf, insbesondere mit Blick auf eine vereinfachte Handhabung.

Es ist deshalb die Aufgabe der Erfindung, einen Verschlussstopfen für den Verschluss einer Anschlussöffnung eines Heizkörpers vorzuschlagen, der eine vereinfachte Handhabung ermöglicht und der darüber hinaus die Herstellung und/oder den Transport eines Heizkörpers zu verbessern hilft.

Zur Lösung dieser Aufgabe wird mit der Erfindung vorgeschlagen ein Verschlussstopfen, der dem Verschluss einer Anschlussöffnung eines Heizkörpers bis zu dessen Endmontage dient, mit einem Stopfenkörper aus Kunststoff, der eine druckabhängig öffnende Auslassöffnung aufweist.

Es lässt sich herstellungsbedingt nicht vermeiden, dass im Innenraum eines Heizkörpers ein Rest von Wasser oder Feuchtigkeit verbleibt. Dieses Restwasser oder diese Restfeuchtigkeit verdampft beim Lackiervorgang, der bei vergleichsweise hohen Temperaturen durchgeführt wird. Es kommt infolgedessen zur Ausbildung eines Dampfdruckes innerhalb des Heizkörpers, weil die Anschlussöffnungen nach dem Stand der Technik während des Lackiervorganges zum Zwecke des Schutzes der Gewinde mittels entsprechender Schutzstopfen verschlossen sind. In der Konsequenz führt dies zu einem unkontrollierten Ausdampfen über die nicht druckdicht verschlossenen Gewindegänge zwischen Anschlussöffnung einerseits und Schutzstopfen andererseits. Infolge dieses Ausdampfens können sich in nachteiliger Weise schlechte Lackierergebnisse und/oder Lackschäden insbesondere im Bereich der Anschlussöffnungen einstellen, beispielsweise durch Blasenbildung des noch nicht endfertig ausgehärteten Lackes.

Die erfindungsgemäße Ausgestaltung schafft hier Abhilfe und überwindet den vorbeschriebenen Nachteil.

Der erfindungsgemäße Verschlussstopfen, der auch als Ventilstopfen bezeichnet werden kann, ist mit einer Auslassöffnung ausgerüstet. Diese Auslassöffnung ist derart ausgestaltet, dass sie druckabhängig öffnet. Kommt es also während eines Lackiervorganges zur Ausbildung eines gestiegenen Dampfdruckes innerhalb des Heizkörpers, so kann eine Ausdampfung in kontrollierter Weise über die druckabhängig öffnende Auslassöffnung erfolgen, so dass in der Konsequenz Beeinträchtigungen des Lackierergebnisses in vorteilhafter Weise vermieden werden können.

Die druckabhängig öffnende Auslassöffnung kann gemäß einer ersten Ausführungsalternative der Erfindung im ungeöffneten Zustand durch ein Wachs, einen Klebstoff, einen beispielsweise im 2-Komponenten-Verfahren hergestellten Kunststoff oder dergleichen verschlossen ausgebildet sein. Das Eindringen von Lack in den Innenraum des Heizkörpers und/oder das Gewinde der zugehörigen Anschlussöffnung wird so wirkungsvoll vermieden. Kommt es infolge der hohen Temperaturen beim Lackiervorgang zu einem Ansteigen des Dampfdruckes innerhalb des Heizkörpers, so reißt die durch den Wachs, den Klebstoff oder dergleichen Material verschlossene Auslassöffnung auf und ermöglicht so ein kontrolliertes Entweichen des sich im Innenraum des Heizkörpers gebildeten Dampfes. Die Auslassöffnung bleibt auch bei nachlassendem Dampfdruck infolge einer Abkühlung offen, so dass Frischluft von außen durch die Öffnung in den Heizkörper eingesaugt werden kann. Der mit dem erfindungsgemäßen Verschlussstopfen bewirkte Luftaustausch führt darüber hinaus zu dem Vorteil, dass eine Geruchsbelästigung insbesondere beim Endverbraucher, das heißt beim Kunden vermieden werden kann. Die im Zuge des Lackiervorganges aufgrund der Heizkörpererwärmung im Innenraum des Heizkörpers entstehenden Dämpfe können dank des erfindungsgemäßen Verschlussstopfens im Zuge der Abkühlung durch Frischluft ausgetauscht werden, womit das Verbleiben von geruchsbelästigenden Dämpfen innerhalb des Heizkörpers weitestgehend vermieden wird.

Der erfindungsgemäße Verschlussstopfen findet im Zusammenhang mit herkömmlichen Heizkörpern Verwendung. Diese bestehen in aller Regel aus einzelnen Grundelementen, die miteinander verschweißt sind und in ihrer Gesamtheit den Heizkörper ergeben. Bevorzugterweise wird der Verschlussstopfen in die zugehörige Anschlussöffnung des Heizkörpers vor Beginn einer Heizkörperdichtigkeitsprüfung eingesetzt. Über die Dauer der Dichtigkeitsprüfung bleibt der Stopfen verschlossen. Auch während dem nachfolgenden Herstellungsschritt der Tauchgrundierung öffnet sich der Verschlussstopfen nicht und bleibt verschlossen. Erst nach einer ersten Einbrennphase öffnet die Auslassöffnung des Stopfens und ermöglicht so die Entweichung von im Innenraum des Heizkörpers befindlichen Dämpfen und/oder Gasen zwecks Druckausgleich. Es folgt anschließend der Herstellungsschritt der Pulverbeschichtung sowie ein zweiter Einbrennvorgang. Während dieser Verfahrensschritte ist der Verschlussstopfen offen und bleibt auch offen, da er sich bereits nach dem ersten Einbrennvorgang geöffnet hat.

Gemäß einer alternativen Ausgestaltung der Erfindung kann vorgesehen sein, dass die Auslassöffnung von einem Ventil bereitgestellt ist. Gemäß dieser Ausführungsvariante kommt ein Druckventil zum Einsatz, das in aus dem Stand der Technik an sich bekannter Weise arbeitet. Bevorzugterweise ist der Öffnungsdruck des Ventils einstellbar, so dass heizkörperspezifische und/oder lackiervorgangspezifische Besonderheiten berücksichtigt werden können. Das Druckventil öffnet, sobald der Öffnungsdruck innerhalb des Heizkörpers erreicht ist. Ein kontrolliertes Ausdampfen wird so ermöglicht. Sobald der Druck innerhalb des Heizkörpers unter den Öffnungsdruck des Ventils absinkt, verschließt das Ventil wieder automatisch.

Anders als aus dem Stand der Technik bekannte Schutzstopfen verbleibt der erfindungsgemäße Verschlussstopfen in der zugehörigen Anschlussöffnung des Heizkörpers auch noch nach Abschluss des Lackiervorganges. Er wird anders als aus dem Stand der Technik vorbekannte Schutzstopfen nicht entfernt und durch eine Transportsicherung ersetzt. Der erfindungsgemäße Verschlussstopfen dient vielmehr nach Abschluss des Lackiervorganges auch als Transportsicherung und verbleibt in der zugehörigen Anschlussöffnung bis zur Endmontage des Heizkörpers. Dies ist deshalb möglich, weil der erfindungsgemäße Verschlussstopfen einen Druckausgleich gestattet. Sobald ein Lackiervorgang abgeschlossen ist, kommt es zur Abkühlung des Heizkörpers. Infolgedessen kann es zur Ausbildung eines Unterdrucks innerhalb des Heizkörpers kommen, weshalb aus dem Stand der Technik bekannte Schutzstopfen zu entfernen sind, um einen Druckausgleich zu ermöglichen. Würden die Schutzstopfen nicht entfernt, so würde der sich nach einem Auskühlen des Heizkörpers im Inneren des Heizkörpers bildende Unterdruck eine nachträgliche Entfernung der Schutzstopfen erschweren. Diese werden deshalb entfernt und nach einem vollständigen Abkühlen des Heizkörpers zu Transportzwecken durch Sicherheitsstopfen ersetzt. Die erfindungsgemäße Ausgestaltung macht die zusätzliche Verwendung von Sicherungsstopfen ebenso überflüssig wie den zugehörigen Arbeitsschritt. Die Verschlussstopfen nach der Erfindung können in den zugehörigen Anschlussöffnungen des Heizkörpers verbleiben. Sie ermöglichen einen Druckausgleich, weshalb die Ausbildung eines Unterdrucks im Heizkörper vermieden wird. Sie müssen deshalb auch nicht entfernt werden und können als Sicherungsstopfen zu Transportzwecken am Heizkörper verbleiben. Die aus dem Stand der Technik bekannte Funktionsunterscheidung zwischen Schutzstopfen einerseits und Sicherungsstopfen andererseits vereinigt der erfindungsgemäße Verschlussstopfen, was insgesamt zu einer vereinfachten Handhabung führt.

Der Verschlussstopfen ist bevorzugterweise mit einer Antihaft-Beschichtung ausgerüstet. Eine vereinfachte Demontage, das heißt ein vereinfachtes Herausschrauben aus der zugehörigen Anschlussöffnung des Heizkörpers wird so erreicht. Darüber hinaus können ungewollte Risse im endfertig ausgehärteten Lack bei einer Demontage, das heißt einem Ausbau des Verschlussstopfens verhindert werden. Durch eine entsprechende Randkontur des Verschlussstopfens lässt sich dieser Effekt gleichfalls erreichen und/oder unterstützen. Bevorzugterweise ist die Außenkontur bzw. Geometrie des Verschlussstopfens im Bereich der Dichtfläche, das heißt der Anschlussfläche zum Heizkörper derart konstruiert, dass ein Lackabriss beim Herausdrehen verhindert ist.

Mit der Erfindung wird ferner ein Heizkörpersystem vorgeschlagen, und zwar mit einem aus dem Stand der Technik an sich bekannten Heizkörper und einem Verschlussstopfen nach einem der vorhergehenden Merkmale.

Der Verschlussstopfen wird in eine Anschlussöffnung des Heizkörpers vor Beginn des Lackierprozesses eingeschraubt, zu welchem Zweck er je nach Ausgestaltung der im Heizkörper vorgesehenen Anschlussöffnung über ein Innengewinde oder ein Außengewinde verfügt. Er verbleibt dort bis zur Endmontage durch den Monteur am Einbauort. Er dient insofern als Schutzstopfen während des Lackiervorgangs und als Sicherungsstopfen, das heißt als Transportsicherung während des Transportvorganges zum Einbauort. Dabei ist aufgrund der erfindungsgemäß vorgesehenen Auslassöffnung des Verschlussstopfens vorgesehen, dass Lackierschäden aufgrund von unkontrolliert austretenden Dämpfen während des Lackiervorganges vermieden werden.

Der Verschlussstopfen besteht bevorzugterweise aus Kunststoff, was die Handhabung und den Transport vereinfacht. Er ist als Einwegbauteil konzipiert und kann nach seiner bestimmungsgemäßen Entfernung entsorgt und/oder recycelt werden.

Gemäß einem weiteren Merkmal der Erfindung kann das System über eine Dichtungseinrichtung verfügen. Diese Dichtungseinrichtung ist im eingesetzten Zustand des Verschlussstopfens zwischen Verschlussstopfen einerseits und Heizkörper andererseits zwecks Abdichtung angeordnet. Es wird so eine zusätzliche Sicherheit zur Vermeidung einer unkontrollierten Ausdampfung geschaffen. Darüber hinaus kann die Dichtungseinrichtung als definierte Trenneinrichtung benutzt werden, die eine Entfernung des Verschlussstopfens gestattet, ohne dass die Gefahr eines Aufreißens des schon ausgehärteten Lackes besteht. In diesem Zusammenhang kann die Dichtungseinrichtung in vorteilhafter Weise auch dazu genutzt werden, als elastisches Widerlager für ein Schneidwerkzeug zu dienen, welches dazu genutzt werden kann, den ausgehärteten Lack gratfrei zum Zwecke der Entfernung des Verschlussstopfens aufschneiden bzw. auftrennen zu können.

Die Dichtungseinrichtung kann gemäß einer ersten Alternative der Erfindung als separates Bauteil ausgebildet sein. So kann die Dichtungseinrichtung beispielsweise durch einen O Ring gebildet sein.

In einer alternativen Ausgestaltung der Erfindung kann vorgesehen sein, die Dichtungseinrichtung als integralen Bestandteil des Verschlussstopfens auszubilden. Beispielsweise kann vorgesehen sein, die Dichtungseinrichtung aus Silikon, Gummi oder einem ähnlichen Material zu bilden, das an den Stopfenkörper des Verschlussstopfens angespritzt ausgebildet ist.

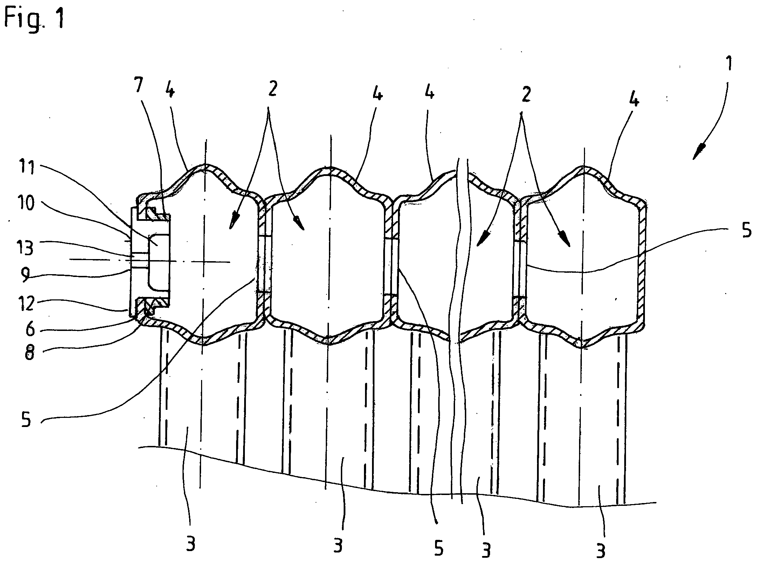

Weitere Merkmale und Vorteile der Erfindung ergeben sich aus der nachfolgenden Beschreibung anhand der einzigen Figur 1, die in schematischer Schnittdarstellung einen Heizkörper mit einem erfindungsgemäßen Verschlussstopfen zeigt.

Figur 1 lässt in schematisch geschnittener Seitenansicht einen Heizkörper 1 erkennen. Dieser ist aus miteinander verbundenen Grundkörpern 2 gebildet, wobei ein jeder Grundkörper 2 über einen Rohrabschnitt 3 und einen Kopfabschnitt 4 verfügt. Benachbarte Grundkörper 2 sind über im jeweiligen Kopfabschnitt 4 ausgebildete Überströmungsöffnungen 5 strömungstechnisch miteinander verbunden.

Der mit Bezug auf die Zeichnungsebene nach Figur 1 linke Grundkörper 2 stellt eine Anschlussöffnung 6 bereit. Diese Anschlussöffnung 6 dient dazu, den Heizkörper 1 im bestimmungsgemäßen Verwendungsfall an eine Anschlussleitung anschließen zu können, gegebenenfalls unter Zwischenordnung eines Anschlussstutzens.

Im gezeigten Ausführungsbeispiel ist die Anschlussöffnung 6 heizkörperinnenseitig an ein Hülsenteil 7 angeschlossen. In Verlängerung der Anschlussöffnung 6 stellt das Hülsenteil 7 zusammen mit der Anschlussöffnung 6 ein Innengewinde 8 zur Verfügung. Die Verwendung des Hülsenteils 7 ist optional.

In die Anschlussöffnung 6 und das optional vorgesehene Hülsenteil ist ein Verschlussstopfen 9 nach der Erfindung eingesetzt. Zu diesem Zweck verfügt der Verschlussstopfen 9 über ein Außengewinde, das korrespondierend zum Innengewinde 8 der Anschlussöffnung 6 und des Hülsenteils 7 ausgebildet ist.

Der Verschlussstopfen 9 ist aus einem Stutzenkörper 11 einerseits und einem flächigen Randabschnitt 12 anderseits gebildet. Wie die Darstellung nach Figur 1 kennen lässt, trägt der Stopfenkörper 11 das Außengewinde. Im endmontierten Zustand ist der Stopfenkörper 11 in die Anschlussöffnung 6 und das optionale Hülsenteil 7 eingesetzt, wohingegen der Abschnitt 12 dichtend auf der zugewandten Außenoberfläche des Heizkörpers 1 auffliegt.

Die Oberfläche 10 des Verschlussstopfens 9, insbesondere die Oberfläche des Stopfenkörpers 11 ist mit einer Antihaft-Beschichtung ausgerüstet.

Der Stopfenkörper 11 verfügt über eine auch den Randabschnitt 12 durchragende Auslassöffnung 13. Im ungeöffneten Zustand der Auslassöffnung 13 ist diese durch ein Wachs, einen Klebstoff oder dergleichen verschlossen. Die Darstellung nach Figur 1 zeigt den geöffneten Zustand der Auslassöffnung 13. Das Wachs, der Klebstoff oder dergleichen ist in diesem Fall aufgrund einer vorherigen Druckbeaufschlagung entfernt. Anstelle des Wachses, des Klebstoffes oder dergleichen kann die Auslassöffnung 13 auch über ein Ventil verfügen. Von erfindungswesentlicher Bedeutung ist allein, dass die Auslassöffnung 13 druckabhängig öffnet.

### Bezugszeichenliste:

- 1: Heizkörper
- 2: Grundkörper
- 3: Rohrabschnitt
- 4: Kopfabschnitt
- 5: Überströmungsöffnung
- 6: Anschlussöffnung
- 7: Hülsenteil
- 8: Innengewinde
- 9: Verschlussstopfen
- 10: Oberfläche
- 11: Stopfenkörper
- 12: Randabschnitt
- 13: Auslassöffnung

## Patentansprüche

1. Verwendung eines Verschlussstopfens (9) zum Verschluss einer Anschlussöffnung (6) eines Heizkörpers (1) bis zu dessen Endmontage, wobei der Verschlussstopfen (9) während eines Lackiervorganges des Heizkörpers als Schutzstopfen und während eines Transportvorgangs des Heizkörpers (1) zum Einbauort als Sicherungsstopfen dient, wobei der Verschlussstopfen (9) einen Stopfenkörper (11) aus Kunststoff hat, der eine druckabhängig öffnende Auslassöffnung (13) aufweist, die zwecks Druckausgleich öffnet.

2. Verwendung nach Anspruch 1, wobei die Auslassöffnung (13) im ungeöffneten Zustand durch ein Wachs, einen Klebstoff oder dergleichen verschlossen ist.

3. Verwendung nach Anspruch 1, wobei die Auslassöffnung (13) von einem Ventil bereitgestellt ist.

4. Verwendung nach einem der vorhergehenden Ansprüche, wobei der Stopfenkörper (11) mit einem zu einem Innengewinde (8) der Anschlussöffnung (6) des Heizkörpers (1) korrespondierend ausgebildeten Außengewinde in die Anschlussöffnung (6) eingesetzt wird.

5. Verwendung nach einem der vorhergehenden Ansprüche, wobei eine Dichtungseinrichtung als separates Bauteil zur Zwischenordnung zwischen dem Verschlussstopfen (9) und dem Heizkörper (1) eingesetzt wird.

## Claims

1. A use of a closing plug (9) for closing a connection opening (6) of a radiator (1) until the final installation thereof, wherein the closing plug (9) serves as protective plug during a lacquering process of the radiator and as safety plug during a transport operation of the radiator (1) to the installation site, wherein the closing plug (9) comprises a plug body (11) made of plastic which comprises an outlet port (13) which opens in dependence on pressure and for the purpose of a pressure equalization.

2. A use according to claim 1, wherein in the closed state the outlet port (13) is closed by a wax, an adhesive or the like.

3. A use according to claim 1, wherein the outlet port (13) is provided by a valve.

4. A use according to one of the preceding claims, wherein the plug body (11) having an external thread configured correspondingly to an internal thread (8) of the connection opening (6) of the radiator (1) is inserted into the connection opening (6).

5. A use according to one of the preceding claims, wherein a sealing device is inserted as a separate structural element for being interposed between the closing plug (9) and the radiator (1).

## Revendications

1. Utilisation d'un bouchon de fermeture (9) pour fermer un orifice de raccordement (6) d'un radiateur (1) jusqu'au montage final de celui-ci, le bouchon de fermeture (9) servant de bouchon de protection pendant un processus de vernissage du radiateur et servant de bouchon de sécurité pendant un processus de transport du radiateur (1) jusqu'à l'emplacement de montage, le bouchon de fermeture (9) comprenant un corps de bouchon (11) en plastique, qui comprend un orifice de sortie (13) s'ouvrant en fonction de la pression pour effectuer une égalisation de pression.

2. Utilisation selon la revendication 1, dans laquelle l'orifice de sortie (13) est fermée par une cire, une colle ou similaire dans l'état non ouvert.

3. Utilisation selon la revendication 1, dans laquelle l'orifice de sortie (13) est fourni par une soupape.

4. Utilisation selon l'une des revendications précédentes, dans laquelle le corps de bouchon (11) ayant un filetage extérieur, qui est conçu de manière correspondante à un filetage intérieur de l'orifice de raccordement &) du radiateur (1), est inséré dans l'orifice de raccordement (6).

5. Utilisation selon l'une des revendications précédentes, dans laquelle un dispositif d'étanchéité est inséré comme élément de construction séparé de sorte qu'il est interposé entre le bouchon de fermeture (9) et le radiateur (1).
